Europäisches Patentamt

European Patent Office

Office européen des brevets

(19)

(11) Veröffentlichungsnummer: **0 233 538 B1**

# (12) EUROPÄISCHE PATENTSCHRIFT

(45) Veröffentlichungstag der Patentschrift: **18.09.91**

(51) Int. Cl.⁵: **H01G 1/11**

(21) Anmeldenummer: **87101432.0**

(22) Anmeldetag: **03.02.87**

(54) **Elektrischer Kondensator mit Abreisssicherung.**

(30) Priorität: 15.02.86 DE 3604887
21.11.86 DE 3639791

(43) Veröffentlichungstag der Anmeldung:
26.08.87 Patentblatt 87/35

(45) Bekanntmachung des Hinweises auf die
Patenterteilung:
18.09.91 Patentblatt 91/38

(84) Benannte Vertragsstaaten:
**DE FR GB IT SE**

(56) Entgegenhaltungen:
DE-A- 2 236 501     DE-A- 2 650 468
DE-A- 2 837 215     DE-B- 1 289 584
FR-A- 2 246 950     FR-A- 2 494 029
US-A- 3 185 905     US-A- 3 909 683
US-A- 4 336 311     US-A- 4 633 365

(73) Patentinhaber: **Licentia Patent-**
**Verwaltungs-GmbH**
**Theodor-Stern-Kai 1**
**W-6000 Frankfurt/Main 70(DE)**

(72) Erfinder: **Dexel, Rudolf**
**Zimmerstrasse 2 B**
**W-1000 Berlin 45(DE)**
Erfinder: **Dunkel, Dr. Wolfhart**
**Am Bühl 3**
**W-3501 Annatal(DE)**

(74) Vertreter: **Lertes, Kurt, Dr. et al**
**Licentia Patent-Verwaltungs-GmbH Theodor-**
**Stern-Kai 1**
**W-6000 Frankfurt/M 70(DE)**

## Beschreibung

Die Erfindung betrifft eine elektrische Sicherung gemäß dem Gattungsbegriff des Anspruchs 1.

Eine derartige Sicherung ist durch die DE-OS 31 10 979 bekannt.

Die Umhüllung ist bei dieser bekannten Ausführungsform durch eine geschlitzte Hülse gegeben, deren Schlitz durch den an beiden Seiten des Schlitzes an der Hülse befestigten Sicherungsleiter überbrückt ist. Bei einer Aufweitung der Oberfläche des Wickels an einer beliebigen Stelle des Umfangs soll sich die Hülse am Schlitz stärker aufsperren und damit den Sicherungsleiter zum Reißen bringen.

In der Praxis bietet diese Ausnehmung jedoch nicht den für den Kondensator zu fordernden optimalen Schutz. Da nämlich die Wickelkörper fertigungsbedingt Durchmessertoleranzen aufweisen, liegt die Hülle in den seltensten Fällen wirklich am gesamten Umfang (ohnehin mit Ausnahme des Schlitzes) eng an der Oberfläche des Wickelkörpers an. Die unvermeidlich auftretenden Hohlräume zwischen Wickel und Hülse aber bieten Raum für eine Oberflächenaufweitung des Wickels an diesen Stellen, ohne daß die Hülse selbst aufgeweitet wird.

Selbst unter der nicht selbstverständlichen Annahme, daß sich die Hülse in Umfangsrichtung nicht selbst dehnt, kann der Sicherungsdraht im Schlitzbereich sich (wenn auch geringfügig) dehnen, bevor er reißt. Dies ist eine zusätzliche Fehlerquelle.

Schließlich können Oberflächenverwerfungen des Wickels im Schlitzbereich selbst auftreten, die ebenfalls kein Aufweiten der Hülse bewirken. Diese Fehlermöglichkeit ist häufiger zu erwarten, weil die Hülse hier keinen Widerstand entgegensetzt. In allen drei geschilderten Fällen reißt der Sicherungsleiter eventuell erst, wenn es für den Schutz zu spät ist.

Bei einer Abschaltvorrichtung nach der DE-OS 23 50 271 wird die Gasbildung des Dielektrikums bei unzulässig hoher Erwärmung während eines Defekts am Kondensatorwickel ausgenutzt. Der Sicherungsleiter ist an einer sich bei innerem Überdruck verwölbenden Oberfläche des Kondensatorwickels so angebracht, daß bei einem Überdruck der elektrische Leiter der Sicherung unterbrochen wird. Das setzt voraus, daß die Umhüllung des Kondensatorwickels selbst nicht durch den Überdruck verformbar sein darf. Innerhalb der als Druckbehälter wirkenden, auch im Defektfall unzerstört erhalten bleibenden Umhüllung ist in einer definierten Zone am Kondensatorwickel eine Sollbruchstellen in Form von Rillen oder Kerben aufweisende Isolierstoffplatte angebracht, die einen Sicherungsleiter in Form einer aufgeklebten Metallfolie oder einer aufgedampften Metallschicht trägt. Auf der den Kondensatorwickel abgewandten Seite der Isolierstoffplatte ist ein elastisches Material innerhalb der Öffnung vorgesehen, das es ermöglicht, daß die Isolierstoffplatte durch den sich unter dem Gasdruck aufwölbenden Kondensatorwickel in dieses elastische Material gedrückt wird. Dabei bricht die Isolierstoffplatte und unterbricht damit auch den Sicherungsleiter. Durch diese Unterbrechung wird der über den Sicherungsleiter von den äußeren Anschlüssen des Kondensators führende Stromkreis ausgeschaltet.

In denjenigen Fällen, in denen gattungsgemäß der Kondensatorwickel aus metallisierter Kunststoffolie gewickelt wird, entsteht im Defektfall in der Regel kein Gas, das einen Überdruck zur Auslösung der Sicherung aufbringt. Die im Defektfall auftretende partielle Oberflächenvergrößerung des Kondensatorwickels kann, anders als ein Gasdruck, durchaus an einer Stelle wirken, an der gerade keine Isolierstoffplatte mit dem Sicherungsleiter liegt, so daß die bekannte Anordnung hier versagt.

Auch in der DE-PS 12 89 584 ist ein Kondensator mit einer Überdruckabreißsicherung angegeben. Hierbei ist ein in Isolieröl stehender Kondensatorwickel in einem Gehäuse eingebaut, das eine Dehnungsmöglichkeit in Richtung der Wickelachse hat. Im Schadensfall gibt es an der Schadensstelle durch Überhitzung eine starke Gasbildung, die einen Druck erzeugt, der auch in Richtung der Wickelachse wirkt und das Gehäuse an der Dehnstelle verlängert. Dabei reißt ein interner Anschlußdraht ab und unterbricht die Stromführung.

Diese Bauart bedingt einen erheblichen Aufwand dadurch, daß der Kondensatorwickel in jedem Fall in ein geeignetes Gehäuse eingebaut werden muß und dazu noch ein im Defektfall einen Gasüberdruck erzeugendes Imprägniermittel notwendig ist. Daher ist diese Lösung für Kondensatorwickel die nicht imprägniert werden müssen, also insbesondere für metallisierte Folienkondensatoren, wenig geeignet.

Der Erfindung liegt die Aufgabe zugrunde, eine elektrische Sicherung der im Oberbegriff des Anspruchs 1 genannten Gattung anzugeben, die tatsächlich bei einer an jeder beliebigen Stelle am Umfang des Kondensatorwickels auftretenden Oberflächenvergrößerung einen dehnungsunfähigen Sicherungsleiter zum Reißen bringt.

Diese Aufgabe wird gemäß der Erfindung durch die im Anspruch 1 gekennzeichneten Merkmale gelöst.

Im Falle einer elektrischen Überlastung des Kondensatorwickels tritt dabei eine Verformung der Wickelgeometrie auf, wodurch die Umhüllung an jeder beliebigen Stelle gesprengt und der dort mit ihr verhaftete Sicherungsleiter unterbrochen wird. Die erfindungsgemäße Bauart bietet den Vorteil, daß die Wickel als einzeln elektrisch abgesichertes Element entweder einzeln oder zu mehreren verschaltet in ein Gehäuse eingebaut werden können, wobei das Gehäuse für die Funktion der Sicherung unerheblich ist. Mit der erfindungsgemäßen Lösung wird nicht der fertige Kondensator mit einer unterbrechenden Sicherung versehen, sondern schon der noch nicht eingebaute Kondensatorwickel, so daß dem Kondensatorhersteller auf vorteilhafte Weise viele Einbauvarianten offen bleiben.

Die Umhüllung muß im gesamten für den Kondensator zulässige Temperaturbereich in der oben beschriebenen Weise voll funktionsfähig sein, d. h. ohne Wickelschädigung muß sie in diesem Temperaturbereich unversehrt bleiben und im Falle der Wickelschädigung und einer dadurch verursachten Wickelverformung im gesamten Temperaturbereich gesprengt werden. Im gleichen Sinne muß sich der mit der Umhüllung verhaftete elektrische Sicherungsleiter verhalten.

Vorteilhafte Ausgestaltungen der Erfindung sind in den Unteransprüchen gekennzeichnet.

Eine geeignete, insbesondere harte und spröde, den Kondensatorwickel vorzugsweise allseitig umgebende Umhüllung erhält man durch Beschichtung mit Reaktionsharzen, die im getrockneten bzw. gehärteten Zustand eine Glasübergangstemperatur aufweisen, die mindestens der oberen zulässigen Kondensatortemperatur entspricht, und die im zulässigen Temperaturbereich eine hinreichende Sprödigkeit aufweisen, so daß die Beschichtung bei Verformung des Kondensatorwickels reißt oder aufplatzt.

Solche Beschichtungen können mit Harzen unterschiedlicher chemischer Basis erhalten werden. Vorzugsweise eignen sich hierfür ungesättigte Polyesterharze, ungesättigte Esterimidharze, Epoxidharze, Polyurethanharze und Phenolharze unter Verwendung üblicher für die Harze geeignete Härtungs-mittel sowie Kombinationen dieser Harze. Weiterhin können diese Beschichtungsharze zum Erreichen eines gewünschten Eigenschaftsprofils weitere Zusatzstoffe enthalten, wie z. B. Komponenten zur Erhöhung der Vernetzungsdichte, Thixotropierungsmittel, Füllstoffe und Farbstoffe. Die Härtung der Beschichtung kann bei Raumtemperatur oder bei erhöhter Temperatur erfolgen. Besonders vorteilhaft ist eine Härtung der Umhüllung nach dem Aufbringen auf den Kondensatorwickel durch Strahlung insbesondere Lichteinwirkung.

Eine zweite geeignete Umhüllung des Kondensatorwickels erhält man durch eine anorganische Glasbeschichtung. Vorzugsweise eignen sich für die Herstellung einer erfindungsgemäßen Umhüllung vergleichsweise niedrig schmelzende Glaslote, bei denen eine thermische Überlastung der zu umhüllenden Wickel nicht stattfindet. Die Dicke der Glasbeschichtung kann im Bereich von 0,05 bis 1,5 mm, vorzugsweise im Bereich von 0,15 bis 1,0 mm liegen.

Für das Aufbringen der erfindungsgemäßen Beschichtungen (Umhüllungen) der Kondensatorwickel kommen alle Verfahren in Betracht, die für die Herstellung von Reaktionsharzbeschichtungen auf Formkörpern ebenso wie von Glaslotbeschichtungen geeignet sind. Für den vorliegenden Fall der Kondensatorwickelumhüllung durch Beschichtung sind insbesondere das Tauchverfahren, die elektrostatische Beschichtung und das Wirbelsintern zu bevorzugen.

Für das erfindungsgemäße Aufbringen des Sicherungsleiters kommen verschiedene Herstellungswege in Betracht:

a eine leitfähige Beschichtung wird z. B. im Siebdruckverfahren flächig über den Umfang des Wickels aufgebracht. Aus dieser wird anschließend z. B. durch "Fräsen" - wie aus der Herstellung von Kohleschichtwiderständen bekannt - oder durch Abätzen nach Art der Leiterplattentechnik ein Leiterband erhalten, wobei Anfang und Ende des Leiterbandes an den entgegengesetzten Wickelstirnseiten liegen. Das eine Leiterbandende wird beispielsweise durch Löten mit der Anschlußleitung des Wickels verbunden, an das andere Leiterbandende wird die nach außen führende Anschlußleitung angebracht.

b In einer anderen Ausführung wird als Sicherungsleiter, der im Falle der Zerstörung des Wickels unterbrochen wird, ein Sicherungsdraht um den Umfang gelegt. Die Anschlüsse werden analog dem vorstehend beschriebenen Verfahren angebracht. Diese Version ist besonders für im Tauchverfahren h ergestellte Umhüllungen geeignet, da der Sicherungsdraht durch einen zusätzlichen Tauchvorgang fixiert und in die Umhüllung integriert wird.

c In einer weiteren Ausführung wird die Bahn des Sicherungsleiters dadurch hergestellt, daß sie im Siebdruckverfahren direkt aufgebracht wird.

d In einer anderen Ausführung wird der Sicherungsleiter hergestellt, indem die aus der Leiterplattentechnik bekannte Additivtechnik angewandt wird.

e Des weiteren wird die Bahn des Sicherungsleiters in der Weise hergestellt, daß unter Verwendung einer entsprechenden Maske die Leiterbahn durch Metallisieren z. B. im Verfahren der Metallbedampfung oder des Metallspritzens aufgebracht wird. Ebenso kann auch wie unter a beschrieben vorgegangen werden, daß zunächst eine flächige Metallisierung der Umhüllung erfolgt und anschließend der Leiter durch "Fräsen" erzeugt wird.

f Schließlich wird die Bahn des Sicherungsleiters dadurch hergestellt, daß ein schmales, vorzugsweise selbstklebendes, dünnes Metallfolienband aufgebracht wird.

Der Sicherungsleiter verläuft vorzugsweise spiralförmig unmittelbar um den Kondensatorwickel und ist dann mit danach aufgebrachten Umhüllung verhaftet. Der Sicherungsleiter kann aber auch statt unter die Umhüllung gelegt zu werden, auf dieselbe aufgebracht und mit ihr verhaftet werden. Schließlich kann im letztgenannten Fall über den Sicherungsleiter noch eine zusätzliche Beschichtung gelegt werden.

Bei einer besonders vorteilhaften Ausbildung der erfindungsgemäßen Sicherung wird der Sicherungsleiter, um seine Funktionsfähigkeit noch zu erhöhen, in Abständen mit Querschnittsverringerungen als Sollbruchstellen versehen. Durch die unterschiedlichen Querschnitte erfolgt eine sehr gute Verzahnung mit der Umhüllung, so daß der Sicherungsleiter über die verhältnismäßig kleinen Abstände sicher festgelegt ist. Damit wird eine mögliche elastische Verformung des metallenen elektrischen Leitermaterials und ein mögliches "Auswandern" des Sicherungsleiters ohne Bruch bei eventuell nur geringen Oberflächenverformungen des Kondensatorwickels ausgeschlossen. Die Querschnittverringerungen können als Lochkerbe und/oder als keilförmige Einschnitte ein- oder beidseitig am Rande des Sicherungsleiters ausgebildet sein.

Die Erfindung ist für alle metallisierten Folienkondensatoren in trockener Bauweise geeignet, z. B. für MKP-Kondensatoren als Motor- und Leuchtstofflampenkondensatoren.

Die Erfindung soll im folgenden anhand von in der Zeichnung dargestellten Ausführungsbeispielen erläutert werden. Es zeigen

Fig. 1    eine Sicherung nach der Erfindung mit einem auf die Umhüllung des Kondensatorwickels aufgebrachten Sicherungsleiter und

Fig. 2    eine Sicherung nach der Erfindung mit einem unter der Umhüllung des Kondensatorwickels verlaufenden Sicherungsleiter.

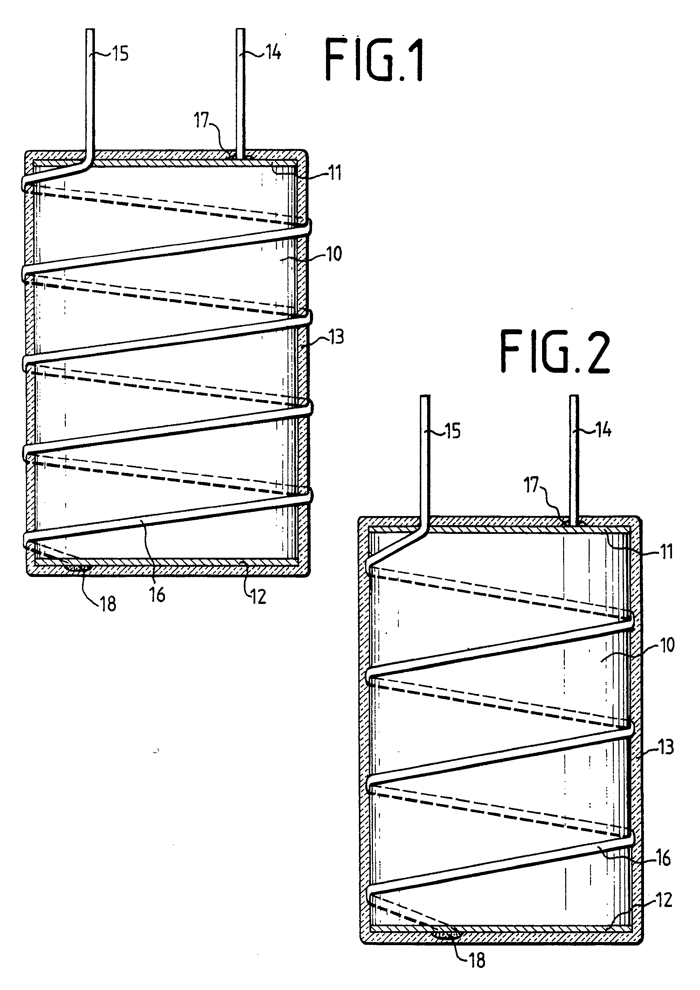

In Fig. 1 ist ein Kondensatorwickel 10 aus (nicht näher gezeigter) metallisierter Kunststoffolie dargestellt, bei dem an den Stirnseiten aufgespritzte Kontaktschichten 11 und 12 vorgesehen sind, die als obere und untere Kontaktbrücke dienen. Der Kondensatorwickel 10 ist allseitig, also auch an den Stirnseiten, mit einer harten, spröden und eng anliegenden Umhüllung 13 versehen. Mit 14, 15 sind zwei nach außen geführte, an der einen Stirnseite des Kondensatorwickels angeordnete Anschlüsse bezeichnet. Der Anschluß 14 ist direkt an der Stelle 17 mit der Kontaktschicht 11 verschweißt oder verlötet. Der Anschluß 15 ist mit dem Anfang eines elektrischen Sicherungsleiters 16 verbunden, der den Wickel 10 spiralförmig umgibt und am anderen Ende mit der anderen Kontaktschicht 12 an der Stelle 18 elektrisch leitend verbunden, z. B. verlötet oder verschweißt ist. Bei einer inneren Schädigung des Kondensatorwickels 10 und einer damit verbundenen geometrischen Verformung reißt oder zerspringt die Umhüllung 13, so daß damit sogleich das im Zerstörungsbereich der Umhüllung 13 liegende Leiterstück des Sicherungsleiters 16 unterbrochen wird: Der elektrische Stromkreis durch den Kondensatorwickel 10 ist damit sicher aufgetrennt.

In Fig. 2 sind gleiche Teile mit gleichen Bezugsziffern wie in Fig. 1 versehen. Der einzige, aber wesentliche Unterschied zur Sicherung entsprechend Fig. 1 liegt darin, daß der Sicherungsleiter 16 direkt auf der Oberfläche des Kondensatorwickels 10 und damit spiralförmig innerhalb der Umhüllung 13 verläuft. Diese Ausführungsform ist optimal zu fertigen, wobei der Sicherungsleiter 16 trotzdem besonders gut beim Aufbringen der Umhüllung 13 mit dieser verhaftet wird.

## Patentansprüche

1.    Elektrische Sicherung für einen mit einer Umhüllung versehenen Kondensatorwickel aus metallisierter Kunststoffolie mit zur Kontaktierung der Metallbeläge an den Stirnseiten aufgebrachten Kontaktschichten, die jeweils mit einem nach außen führenden Anschluß elektrisch leitend verbunden sind, und mit einem an der Umhüllung befestigten elektrischen Sicherungsleiter, der bei einer sich im Defektfall vergrößernden Oberfläche des Kondensatorwickels reißt und damit den nach außen führenden Anschluß unterbricht,
**dadurch gekennzeichnet,**
daß die eng am Kondensatorwickel (10) anliegende Umhüllung (13) hart und spröde ausgebildet ist und über den gesamten Umfang des Kondensatorwickels (10) fest mit dem diesen spiralförmig umgebenden, als Leiterbahn ausgebildeten elektrischen Sicherungsleiter (16) verhaftet ist.

2.    Elektrische Sicherung nach Anspruch 1,
**dadurch gekennzeichnet,**
daß der Sicherungsleiter (16) direkt auf dem Kondensatorwickel (10) aufliegt.

3.    Elektrische Sicherung nach einem der Ansprüche 1 oder 2,
**dadurch gekennzeichnet,**
daß bei einem Kondensatorwickel (10) mit an der Stirnseite angeordneten Anschlüssen (14, 15) der eine Anschluß (14) direkt mit der einen Kontaktschicht (11) und der andere Anschluß (15) über den Sicherungsleiter (16) mit der stirnseitig gegenüberliegenden Kontaktschicht (12) elektrisch leitend (17, 18) verbunden ist.

4. Elektrische Sicherung nach einem der Ansprüche 1 bis 3,
   **dadurch gekennzeichnet,**
   daß die Umhüllung (13) den Kondensatorwickel (10) allseitig umgibt.

5. Elektrische Sicherung nach einem der Ansprüche 1 bis 4,
   **dadurch gekennzeichnet,**
   daß die Umhüllung (13) des Kondensatorwikkels (10) aus einer Reaktionsharzbeschichtung besteht.

6. Elektrische Sicherung nach Anspruch 5,
   **dadurch gekennzeichnet,**
   daß das Bindemittel der Reaktionsharzbeschichtung ein ungesättigter Polyester ist.

7. Elektrische Sicherung nach Anspruch 5,
   **dadurch gekennzeichnet,**
   daß das Bindemittel der Reaktionsharzbeschichtung ein ungesättigtes Esterimidharz ist.

8. Elektrische Sicherung nach Anspruch 5,
   **dadurch gekennzeichnet,**
   daß das Bindemittel der Reaktionsharzbeschichtung ein Epoxidharzsystem ist.

9. Elektrische Sicherung nach Anspruch 5,
   **dadurch gekennzeichnet,**
   daß das Bindemittel der Reaktionsharzbeschichtung ein Polyurethanharz ist.

10. Elektrische Sicherung nach Anspruch 5,
    **dadurch gekennzeichnet,**
    daß das Bindemittel der Reaktionsharzbeschichtung ein Phenolharz ist.

11. Elektrische Sicherung nach einem der Ansprüche 1 bis 4,
    **dadurch gekennzeichnet,**
    daß die Umhüllung des Kondensatorwickels (10) eine Glasbeschichtung ist.

12. Elektrische Sicherung nach einem der Ansprüche 1 bis 11,
    **dadurch gekennzeichnet,**
    daß der Sicherungsleiter (16) ein im Siebdruckverfahren aufgebrachter Leiter ist.

13. Elektrische Sicherung nach einem der Ansprüche 1 bis 11,
    **dadurch gekennzeichnet,**
    daß der Sicherungsleiter (16) subtraktiv aus einer ganzflächigen metallisierten Schicht auf oder unter der Umhüllung (13) herausgearbeitet ist.

14. Elektrische Sicherung nach einem der Ansprüche 1 bis 11,
    **dadurch gekennzeichnet,**
    daß der Sicherungsleiter (16) ein im Additivverfahren durch stromlose Metallisierung aufgebrachter Leiter ist.

15. Elektrische Sicherung nach einem der Ansprüche 1 bis 11,
    **dadurch gekennzeichnet,**
    daß der Sicherungsleiter (16) durch metallische Bedampfung aufgebracht ist.

16. Elektrische Sicherung nach einem der Ansprüche 1 bis 11,
    **dadurch gekennzeichnet,**
    daß der Sicherungsleiter (16) ein durch Metallspitzen aufgebrachter Leiter ist.

17. Elektrische Sicherung nach einem der Ansprüche 1 bis 11,
    **dadurch gekennzeichnet,**
    daß der Sicherungsleiter (16) als auf oder unter die Umhüllung (13) gewickelter Sicherungsdraht ausgebildet ist.

18. Elektrische Sicherung nach einem der Ansprüche 1 bis 11,
    **dadurch gekennzeichnet,**
    daß der Sicherungsleiter (16) ein Metallfolienband ist, das auf oder unter die Umhüllung gelegt ist.

19. Elektrische Sicherung nach Anspruch 18,
    **dadurch gekennzeichnet,**
    daß das Metallfolienband selbstklebend ist.

20. Elektrische Sicherung nach einem der Ansprüche 1 bis 19,
    **dadurch gekennzeichnet,**
    daß der Sicherungsleiter (16) in Abständen mit Querschnittsverringerungen als Sollbruchstellen versehen ist.

21. Elektrische Sicherung nach Anspruch 20,
    **dadurch gekennzeichnet,**
    daß die Querschnittsverringerungen als Lochkerbe und/oder als keilförmige Einschnitte am Rand des Sicherungsleiters (16) ausgebildet sind.

22. Elektrische Sicherung nach einem der Ansprüche 1 bis 21,
    **dadurch gekennzeichnet,**
    daß der Sicherungsleiter (16) durch eine zusätzliche Beschichtung in die Umhüllung (13) integriert ist.

## Claims

1. Electrical protective device for a capacitor winding of metallised synthetic material foil and provided with a sheathing and contact layers, which are applied at the end faces for making contact with the metal coatings and are each electrically conductively connected with a respective connection leading outwards and with an electrical protective conductor, which is fastened at the sheathing and which tears when the surface of the capacitor winding enlarges in the case of a defect and thereby interrupts the connection leading outwards, characterised thereby, that the sheathing (13), which lies closely against the capacitor winding (10), is constructed to be hard and brittle and made to adhere over the entire circumference of the capacitor winding (10) firmly with the electrical protective conductor (16) spirally surrounding this and constructed as conductor track.

2. Electrical protective device according to claim 1, characterised thereby, that the protective conductor (16) lies directly on the capacitor winding (10).

3. Electrical protective device according to one of the claims 1 and 2, characterised thereby, that in the case of a capacitor winding (10) with connections (14, 15) arranged at the end face, the one connection (14) is electrically conductively (17, 18) connected directly with the one contact layer (11) and the other connection (15) by way of the protective conductor (16) with the contact layer (12) lying opposite at the end face.

4. Electrical protective device according to one of the claims 1 to 3, characterised thereby, that the sheathing (13) surrounds the capacitor winding (10) all-round.

5. Electrical protective device according to one of the claims 1 to 4, characterised thereby, that the sheathing (13) of the capacitor winding (10) consists of a reaction resin coating.

6. Electrical protective device according to claim 5, characterised thereby, that the binding agent of the reaction resin coating is an unsaturated polyester.

7. Electrical protective device according to claim 5, characterised thereby, that the binding agent of the reaction resin coating is an unsaturated ester imide resin.

8. Electrical protective device according to one of the claims 1 to 5, characterised thereby, that the binding agent of the reaction resin coating is an epoxide resin system.

9. Electrical protective device according to one of the claims 1 to 5, characterised thereby, that the binding agent of the reaction resin coating is a polyurethane resin.

10. Electrical protective device according to one of the claims 1 to 5, characterised thereby, that the binding agent of the reaction resin coating is a phenol resin.

11. Electrical protective device according to one of the claims 1 to 4, characterised thereby, that the sheathing of the capacitor winding (10) is a glass coating.

12. Electrical protective device according to one of the claims 1 to 11, characterised thereby, that the protective conductor (16) is a conductor applied in a screen-printing process.

13. Electrical protective device according to one of the claims 1 to 11, characterised thereby, that the protective conductor (16) is worked out substractively from a metallised layer over the entire area on or under the sheathing (13).

14. Electrical protective device according to claim 1 to 11, characterised thereby, that the protective conductor (16) is a conductor applied in an additive process by current-free metallising.

15. Electrical protective device according to one of the claims 1 to 11, characterised thereby, that the protective conductor (16) is applied by metallic vapour deposition.

16. Electrical protective device according to one of the claims 1, characterised thereby, that the protective conductor (16) is a conductor applied by metal spraying.

17. Electrical protective device according to one of the claims 1 to 11, characterised thereby, that the protective conductor (16) is constructed as a protective wire wound on or under the sheathing (13).

18. Electrical protective device according to one of the claims 1 to 11, characterised thereby, that the protective conductor (16) is a metal foil tape which is laid on or under the sheathing.

**19.** Electrical protective device according to claim 18, characterised thereby, that the metal foil tape is self adhesive.

**20.** Electrical protective device according to claim 19, characterised thereby, that the protective conductor (16) is provided at spacings (16) with reductions in cross-section as predetermined rupturing points.

**21.** Electrical protective device according to one of the claims 1 to 20, characterised thereby, that the reductions in cross-section are constructed as perforated notch and/or as wedge-shaped recesses at the edge of the protective conductor (16).

**22.** Electrical protective device according to one of the claims 1 to 21, characterised thereby, that the protective conductor (16) is integrated into the sheathing (13) by an additional coating.

**Revendications**

**1.** Sécurité électrique pour un bobinage de condensateur en feuille de matière plastique métallisée, muni d'un enrobage et doté, pour l'établissement des contacts des armatures métalliques, de couches de contact appliquées sur les faces frontales, chaque couche de contact étant électriquement reliés à un organe de connexion allant à l'extérieur, et étant doté d'un conducteur électrique de sécurité qui est fixé à l'enrobage et qui, dans le cas où la surface extérieure du bobinage de condensateur grossit du fait d'un défaut, se rompt et interrompt ainsi l'organe de raccordement allant à l'extérieur,
caractérisée
par le fait que l'enrobage (13) étroitement appliqué sur le bobinage de condensateur (10) est dur et cassant et adhère solidement, sur toute la périphérie du bobinage de condensateur (10), au conducteur de sécurité électrique (16), réalisé en tant que trajet conducteur, entourant hélicoïdalement ledit bobinage.

**2.** Sécurité électrique selon revendication 1,
caractérisée
par le fait que le conducteur de sécurité (16) est appliqué directement sur le bobinage de condensateur (10).

**3.** Sécurité électrique selon l'une des revendications 1 ou 2,
caractérisée

par le fait qu'alors que le bobinage de condensateur (10) comporte des organes de raccordement (14, 15) agencés sur une face frontale, le premier organe de raccordement (14) est électriquement relié directement (17) à la première couche de contact (11), et l'autre organe de raccordement (15) est électriquement relié (18), par l'intermédiaire du conducteur de sécurité (16), A la couche de contact frontale opposée (12).

**4.** Sécurité électrique selon l'une des revendications 1 à 3,
caractérisée
par le fait que l'enrobage (13) entoure le bobinage de condensateur (10) de tous les côtés.

**5.** Sécurité électrique selon l'une des revendications 1 à 4,
caractérisée
par le fait que l'enrobage (13) du bobinage de condensateur (10) est constitué par un revêtement en résine composite.

**6.** Sécurité électrique selon revendication 5,
caractérisée
par le fait que le liant du revêtement en résine composite est un polyester non saturé.

**7.** Sécurité électrique selon revendication 5,
caractérisée
par le fait que le liant du revêtement en résine composite est une résine à ester-imides non saturée.

**8.** Sécurité électrique selon revendication 5,
caractérisée
par le fait que le liant du revêtement en résine composite est un système de résine époxyde.

**9.** Sécurité électrique selon revendication 5,
caractérisée
par le fait que le liant du revêtement en résine composite est une résine de polyuréthane.

**10.** Sécurité électrique selon revendication 5,
caractérisée
par le fait que le liant du revêtement en résine composite est une résine phénolique.

**11.** Sécurité électrique selon l'une des revendications 1 à 4,
caractérisée
par le fait que l'enrobage du bobinage de condensateur (10) est un revêtement en verre.

**12.** Sécurité électrique selon l'une des revendications 1 à 11,

caractérisée
par le fait que le conducteur de sécurité (16)
est un conducteur appliqué par sérigraphie.

13. Sécurité électrique selon l'une des revendications 1 à 11,
caractérisée
par le fait que le conducteur de sécurité (16)
est obtenu en opérant par voie soustractive à
partir d'une couche métallisée sur toute la surface, sur ou sous l'enrobage (13).

14. Sécurité électrique selon l'une des revendications 1 à 11,
caractérisée
par le fait que le conducteur de sécurité (16)
est un conducteur appliqué par un procédé
additif, par métallisation sans courant.

15. Sécurité électrique selon l'une des revendications 1 à 11,
caractérisée
par le fait que le conducteur de sécurité (16)
est appliqué par vaporisation de métal.

16. Sécurité électrique selon l'une des revendications 1 à 11,
caractérisée
par le fait que le conducteur de sécurité (16)
est un conducteur appliqué par pulvérisation
de métal.

17. Sécurité électrique selon l'une des revendications 1 à 11,
caractérisée
par le fait que le conducteur de sécurité (16)
est réalisé sous la forme d'un fil de sécurité
enroulé sur ou sous l'enrobage (13).

18. conducteur de sécurité selon l'une des revendications 1 à 11,
caractérisée
par le fait que le conducteur de sécurité (16)
est une bande de feuille métallique appliquée
sur ou sous l'enrobage.

19. Sécurité électrique selon revendication 18,
caractérisée
par le fait que la bande de feuille métallique
est autocollante.

20. Sécurité électrique selon l'une des revendications 1 à 19,
caractérisée
par le fait que le conducteur de sécurité (16)
est muni, à intervalles, de réductions de sa
section droite constituant des points d'affaiblissement pour rupture.

21. Sécurité électrique selon revendication 20,
caractérisée
par le fait que les réductions de section droite
sont des entailles de forme arrondie et/ou des
encoches en forme de coin dans le bord du
conducteur de sécurité (16).

22. Sécurité électrique selon l'une des revendications 1 à 21,
caractérisée
par le fait que le conducteur de sécurité (16)
est intégré dans l'enrobage (13) grâce à un
revêtement supplémentaire.

# FIG.1

# FIG.2